(19) Europäisches Patentamt
European Patent Office
Office européen des brevets

(11) Veröffentlichungsnummer: **0 522 358 A2**

(12) # EUROPÄISCHE PATENTANMELDUNG

(21) Anmeldenummer: **92110709.0**

(51) Int. Cl.5: **C08L 3/00**, //(C08L3/00,33:00)

(22) Anmeldetag: **25.06.92**

(30) Priorität: **04.07.91 DE 4122212**

(43) Veröffentlichungstag der Anmeldung:
**13.01.93 Patentblatt 93/02**

(84) Benannte Vertragsstaaten:
**CH DE FR GB IT LI NL**

(71) Anmelder: **EMS-INVENTA AG**
**Selnaustrasse 16**
**CH-8001 Zürich(CH)**

(72) Erfinder: **Schmid, Eduard, Dr.sc. nat.**
**Valbeuna**
**CH-7402 Bonaduz(CH)**
Erfinder: **Buehler, Friedrich Severin, Dr. rer. nat.**
**Caznerwiese am Bach 8 K**
**CH-7430 Thusis(CH)**
Erfinder: **Schultze, Hans-Joachim, Dr. rer. nat.**
**Tittwiesenstrasse 11**
**CH-7000 Chur(CH)**

(54) **Stärke enthaltende thermoplastisch verarbeitbare Masse, Verfahren zu ihrer Herstellung sowie ihre Verwendung.**

(57) Die Erfindung betrifft eine thermoplastisch verarbeitbare Masse aus Stärke und extrem hochmolekularen Acrylatcopolymeren.

Die Erfindung betrifft weiterhin ein Verfahren für die Herstellung dieser Massen sowie ihre Verwendung zur Herstellung von Formkörpern jeglicher Art.

EP 0 522 358 A2

Die Erfindung betrifft thermoplastisch verarbeitbare, homogene Massen aus Stärke und extrem hochmolekularen Acrylatpolymeren.

Sie betrifft insbesondere homogene Massen aus unmodifizierter oder chemisch modifizierter Stärke.

Sie betrifft ferner ein Verfahren zur Herstellung solcher Massen, sowie deren Verwendung zur Herstellung von Formkörpern jeglicher Art.

Da Stärke ein makromolekulares pflanzliches Kohlehydrat ist, gibt es Bestrebungen, sie als sogenannten "natürlichen Kunststoff" auf den verschiedensten Gebieten unter Einsatz der bekannten Kunststoffverarbeitungstechniken zur Anwendung zu bringen. Aufgrund ihrer körnigen Struktur müssen native Stärken aber erst aufgeschlossen bzw. destrukturiert werden, bevor sie thermoplastisch verarbeitbar sind.

Dazu wird im allgemeinen eine einen Wassergehalt von 5 bis 18 Gew.-% aufweisende, native Stärke unter intensiver Einwirkung von Scherkräften bei 100 bis 200°C extrudiert, wobei Polyhydroxyverbindungen, Aufschlussmittel wie Alkalisalze, wässriger Ammoniak oder Harnstoff und Harnstoffderivate sowie Entformungsmittel zur Verbesserung der späteren Verarbeitbarkeit, wie z.B. Metallstearate, zugesetzt werden.

Es ist bekannt, dass aus amylosereichen Stärken oder reiner Amylose leichter thermoplastische Massen zu gewinnen sind. Weiterhin sind die an den OH-Gruppen der Glykoseeinheiten geringfügig derivatisierten, besonders ethoxylierten oder propoxylierten Stärke- oder Amylosemassen leichter thermoplastisch zu verarbeiten. Gleichzeitig zeigen diese eine bessere Langzeitstabilität, weil die Retrogradationsfähigkeit durch die Derivatisierung reduziert ist.

Solche Stärkemassen sind in der DE-OS 1 470 965, GB-PS 965 349 und US-PS 3 117 014 beschrieben.

Verfahren, die eine Stärkemasse mit hohem Wasseranteil unter erhöhtem Druck verarbeiten, werden in EP-PS 0 118 240 und EP-OS 0 327 505 geschützt. Von ausserordentlichem Nachteil sind dabei die Schwundwerte, die bis 50% betragen können.

In dem in EP-PS 0 118 240 beschriebenen Prozess, werden sogenannte enterische Polymere, u.a. auch Acrylate oder Methacrylate mit üblichen Molekulargewichten, als Mischungskomponenten genannt, welche die Resistenz von Kapseln aus solchen hochwasserhaltigen Stärkemischungen gegen die Magensäure verbessern sollen.

Spezieller Nachteil von Stärkemassen mit hohem Wasseranteil sind die hohen Schwundwerte, welche bis zu 50 % betragen können. Diesem Nachteil wird in EP-OS O 327 5O5 durch Hinzufügen von Fremdpolymeren mit üblichen Molekulargewichten, wie z.B. Polyethylen, Polystyrol, Polyacrylsäureester, Polymethacrylsäureester, Polyacetal und olefinischen Copolymeren, wie z.B. Ethylenvinylacetatcopolymeren, Ethylenacrylatcopolymeren, Ethylenmethacrylatcopolymeren und Ethylenvinylalkoholcopolymeren, entgegengewirkt.

Weitere Erschwernisse, die trotz Beachtung der Lehren nach dem Stand der Technik bei der Herstellung und Verarbeitung von Stärkemassen, auch solchen aus derivatisierten oder Hochamylose-Stärkenanteil auftreten, sind die folgenden: Verfärbung ist oft nicht zu vermeiden; die Spritzgussverarbeitung ist schwierig, weil die Teile schlecht entformen; die Spritzteile weisen Oberflächendefekte auf und neigen zum Kleben, Verzug und Schwund. Werden die Massen im Extrusionsverfahren, z.B. zu Folien verarbeitet, so ist oft eine hohe Oberflächenrauhigkeit und Klebeneigung vorhanden.

Es ist daher Aufgabe der Erfindung, die Nachteile des oben genannten Stands der Technik zu überwinden und eine destrukturierte Stärkemasse zur Verfügung zu stellen, die thermoplastisch einfacher und sicherer verarbeitbar und herstellbar ist. Weiterhin soll ein Verfahren zur Herstellung solcher Massen sowie aus diesen Massen herstellbare Formkörper bereit gestellt werden.

Diese Aufgabe wird gelöst, durch die thermoplastisch verarbeitbare Masse mit den Merkmalen des Anspruchs 1, dem Verfahren zu ihrer Herstellung gemäss den Ansprüchen 15 und 16 sowie ihre Verwendung zur Herstellung von Formkörpern gemäss Anspruch 20.

Es wurde gefunden, dass sich eine Stärkemasse besonders gut herstellen und thermoplastisch verarbeiten lässt und dabei Formkörper von besserem Aussehen und von erhöhtem Gebrauchswert resultieren, wenn diese Masse besteht aus

a) Stärke, die ganz oder teilweise derivatisiert sein kann,

b) 1 - 15 Gew.-%, bezogen auf a) und b), mindestens eines Acrylatcopolymeren mit einem Molekulargewicht von mehr als 0,4 Millionen,

c) 2 - 15 Gew.-%, bezogen auf a) bis d), Gesamtwassergehalt

d) mindestens 5 Gew.-%, bezogen auf a) bis d), üblichen Additiven für Stärkemassen, wie Weichmacher und Gleitmittel, wobei die Summe von a) bis d) 100 Gew.-% beträgt

und gegebenenfalls zusätzlich

e) übliche Zusätze für Thermoplastmassen, wie Füllstoffe, Verstärkungsmittel, Stabilisatoren, Schlagzähmittel und Antiflammittel in wirksamen Mengen Antiflammittel in wirksamen Mengen

Alternativ besteht erfindungsgemässe Stärkemasse aus

a) 40 - 85 Gew.-Teilen Stärke

b) 1 - 15 Gew.-Teilen mindestens eines Acrylatcopolymern, bevorzugt mit einem Molekulargewicht von 0,4 bis 5,0 Millionen,

c) 2 - 15 Gew.-Teilen Gesamtwassergehalt,

d) 5 - 40 Gew.-Teilen weiteren nach dem Stand der Technik üblichen Additiven für Stärkemassen, wie Weichmacher, Gleitmittel, Harnstoff und/oder Harnstoffderivaten, Proteinen und deren Alkalisalze,

wobei sich die Bestandteile a) bis d) auf 100 Gew.-Teile ergänzen,

und gegebenenfalls zusätzlich

e) für Thermoplastmassen übliche Zusätze.

Für erfindungsgemässe Massen verwendete Stärke kann aus beliebigen Stärkequellen stammen; bevorzugt ist Kartoffelstärke, Weizenstärke, Reisstärke, Erbsenstärke und/oder Maisstärke, welche in nativer oder chemisch modifizierter Form eingesetzt werden kann.

Da jedoch Massen mit einem hohen Gewichtsanteil an verzweigten Polymerketten nur schlecht thermoplastisch umformbar sind, sind Massen mit hohem Anteil an linearen Polymerketten erstrebenswert.

Dies gilt auch für Stärkemassen im allgemeinen sowie für die Masse mit erfindungsgemässer Zusammensetzung. Deshalb sind Stärken mit hohem (linearen) Amylosegehalt vorteilhaft.

Für die Herstellung von einfachen Spritzgussteilen eignen sich aber auch erfindungsgemässe Massen aus destrukturierter Stärke mit einem Amylosegehalt von unter 40 Gew.-%. Jedoch werden Stärken mit höheren Amylosegehalten bevorzugt.

Sowohl die Destrukturierung der nativen Stärke ist besser als auch die Verarbeitung dieser destrukturierten Stärke ist in jedem Fall einfacher und führt zu höherwertigen Spritzgussteilen, wenn die erfindungsgemässe Masse die Komponente b) in einem Anteil von 1-15 Gew.-Teilen bevorzugt 2 bis 10 Gew.-Teilen, besonders bevorzugt 2 bis 6 Gew.-Teilen enthält.

Erfindungsgemässe Massen, die zur Herstellung flächiger Gebilde, wie Blasfolien, Flachfolien, Verbundfolien, Kalanderfolien geeignet sind, wobei insbesondere nachfolgend auch ein Tiefziehprozess möglich sein soll, enthalten Stärken mit einem erhöhten linearen Kettenanteil, d.h. sie besitzen einen Amylosegehalt von mindestens 50 Gew.-%, bevorzugt 65 Gew-% und mehr.

Um dabei einen höheren Gebrauchswert zu erzielen, können die Stärken an den OH-Gruppen der Amylosesequenzen substituiert sein, was die Retrogradationsneigung reduziert. Hierbei haben sich Substitutionsgrade von 0,03 bis 0,30, bevorzugt 0,04 bis 0,25 besonders bewährt. Die bevorzugten Substituenten sind

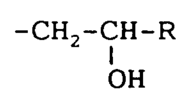

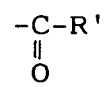

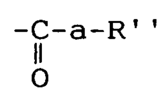

worin

R ein H-Atom oder ein Alkylrest mit 1-18 C-Atomen

R' ein Alkylrest mit 1 bis 18 C-Atomen

R" eine OH-, OR- oder Polyethergruppe und

a eine Methylen-, Ethylen- oder Isopropylengruppe ist

Besonders bevorzugt sind Substituenten der Art:

$$-\underset{\underset{O}{\|}}{C}-CH_3 \qquad (1)$$

$-CH_2-CH_2-OH$ (2)

$-CH_2-CH(OH)-CH_3$ (3)

$$-\underset{\underset{O}{\|}}{C}-O-CH_3 \qquad (4)$$

$$-CH_2-\underset{\underset{O}{\|}}{C}-OX \qquad (5)$$

wobei X ein H-Atom oder Metallkation ist.

Komponente b) der erfindungsgemässen thermoplastisch verarbeitbaren Masse ist mindestens ein Acrylatcopolymeres mit einem Molekulargewicht von mehr als 0,4 Millionen, bevorzugt mehr als 1 Million, besonders bevorzugt 1 bis 5 Millionen.

Solche hohen Molekulargewichte werden im allgemeinen nach der Methode der Emulsionspolymerisation in wässerigem System erreicht.

Hauptcomonomeres dieser Copolymeren ist im allgemeinen Methylmethacrylat. Als Comonore, deren Gesamtanteil im Copolymeren meist nicht mehr als 50 Mol.-% beträgt, werden Ethylhexylacrylat verwendet.

Ausser der Acrylatesterfunktion, die meist statistisch angeordnet vorliegt, können die Produkte auch Blöcke aus weiteren olefinischen Monomeren wie Styrol und Acrylnitril, aber auch Ethylen und Propylen enthalten. Diese können bis 40 Gew.-% des Polymerisats ausmachen und bilden meist das eine der Kettenenden.

Als Komponente b) der erfindungsgemässen thermoplastisch verarbeitbaren Masse können auch Mischungen von verschiedenen Acrylatcopolymertypen verwendet werden, wie z.B. ein rein statistisches Acrylatcopolymer und ein Acrylatblockcopolymer.

Die Wirkungsweise erfindungsgemäss eingesetzter Acrylatcopolymeren mit extrem hohen Molekulargewichten kann man sich in etwa wie folgt vorstellen:

Die Polarität der einzelnen Comonomeren in Copolymeren, die relative Kettensteifigkeit und das hohe Molekulargewicht sowie die ausgezeichnete Hitzestabilität der Copolymeren bewirken beim Compoudiervorgang die starke Scherwirkung, die für den Aufschluss bzw. für die Destrukturierung der nativen Stärkekörner notwendig ist. Gleichzeitig erfolgt eine homogene Verteilung der Scherwärme über die gesamte Masse der Schmelze. Der Extrusionsverlauf wird hierdurch homogener und gleichmässiger, was bei kontinuierlicher Arbeitsweise, z.B. unter Verwendung eines Doppelwellenextruders, zu einer guten Qualität des Stärkestranges mit heller Eigenfarbe führt.

Dass die erfindungsgemässe Kombination der Komponenten Stärke, hochmolkulares Acrylatcopolymer, stärkespezifische Weichmacher und Verarbeitungshilfsmittel zu einer neuartigen thermoplastischen Masse führt, zeigen insbesondere auch die Beispiele und Vergleichsbeispiele, in denen sich auch die Beispiele und Vergleichsbeispiele, in denen sich Verarbeitbarkeit, Qualität und mechanische Eigenschaften der Prüfteile wesentlich von sogenannten Reinstärkemassen, d.h. Stärkemassen ohne weitere wesentliche Zusätze, unterscheiden.

Die für erleichtertes Plastifizieren und Verarbeiten von thermoplastischen Massen auf Stärke- oder Amylosebasis notwendigen Additive sind vielfach beschrieben, so z.B. in DE-OS 1 470 965, DE-OS 2 552 126, GB-PS 965 349, US-PS 3 117 014. Gemäss diesem Stand der Technik werden für erfindungsgemässe Massen als Weichmacher insbesondere Polyhydroxyverbindungen und als Gleitmittel insbesondere Ester, Amide und Salze von Fettsäuren eingesetzt.

Als übliche Zusätze für Thermoplastmassen, die auch für erfindungsgemässen Massen je nach gewähltem Einsatzgebiet Verwendung finden, kommen als Komponente e) Füllstoffe wie Mineralien, z.B. Talk, Kaolin, Gesteinsmehl und $CaCO_3$, besonders Schichtsilikate, sowie Holzschliff in Frage, ferner Verstärkungsmittel wie Glasfasern, Mineralfasern, organische Fasern, beispielsweise Cellulosefasern, Polyamidfasern und Polyesterfasern.

Geeignete Schlagzähmittel sind Kern-Mantel-Polymere mit einer polaren Oberfläche und gegebenenfalls reaktiven Gruppen, olefinische Copolymere mit einem Glasumwandlungspunkt unter 0°C, welche polare Comonomere sowie gegebenenfalls reaktive Gruppen der Arten Säureanhydrid, Epoxid, Isocyanat enthalten.

Ebenfalls als Schlagzähmittel können Polymere mit einem Schmelz- oder Erweichungspunkt unter 170°C und einem Molekulargewicht zwischen 7'000 und 400'000 verwendet werden.

Als Antiflamm-Mittel sind die die Umwelt im Schadensfall wenig belastende Stoffe wie Metallhydroxide, z.B. des Aluminums und Magnesiums, sowie Stickstoffverbindungen, wie Melamin oder Melamincyanurat geeignet.

Als Stabilisatoren werden die handelsüblichen Typen bevorzugt.

Je nach vorgesehener Anwendung können die genannten Zusätze auch kombiniert werden.

Im Verfahren zur Herstellung erfindungsgemässer thermoplastisch verarbeitbaren Massen werden

- die Stärke a), die im allgemeinen in ihrer ursprünglichen Kornform vorliegt und einen Wassergehalt von 5-20% besitzt
- das hochmolekulare Acrylat-Copolymere b)
- gegebenenfalls zusätzliches Wasser c)
- die weiteren Additive d)
- und gegebenenfalls die weiteren Zusätze e)

bei Temperaturen von 100-200°C solange der Einwirkung von Scherkräften unterworfen, bis eine homogene Masse vorliegt, in der die Stärkekörner vollkommen aufgeschlossen bzw. destrukturiert sind. Dabei verläuft die Herstellung der erfindungsgemässen Massen im Vergleich zu Massen aus Stärke ohne erfindungsgemässen Anteil an extrem hochmolekularen Acrylatcopolymeren deutlich günstiger und unter konstanteren Produktionsbedingungen.

Insbesondere wird ein Verfahren vorgeschlagen, in dem die Komponenten vorgemischt oder getrennt in eine beheizte Knet- und/oder Extrusionsvorrichtung dosiert, bei Temperaturen zwischen 100 und 200°C, bevorzugt zwischen 140 und 180°C aufgeschmolzen, gleichzeitig vermischt und unter dem entstehenden Druck einer intensiven Scherung unterworfen werden, dass die Plastifizierung bewirkt. Wahlweise kann die Masse dann druckentlastet werden, gegebenenfalls unter Anlegen eines Vakuums wobei nachfolgend gegebenenfalls in den Förderelementen der Vorrichtung wieder ein Druckaufbau erfolgt. Anschliessend wird die homogenisierte und aufgeschlossenen Masse ausgetragen, geformt, gekühlt und wahlweise zerkleinert.

Entsprechend dem heutigen Stand der Technik wird das Verfahren bevorzugt kontinuierlich, z.B. in einem Doppelwellenextruder, z.B. einer ZSK der Firma Werner und Pfleiderer, Stuttgart, oder z.B. in einem Cokneter der Firma Buss, Pratteln, durchgeführt.

Dabei können die festen Ausgansstoffe in vorgemischter Form dem Einzugstrichter des Extruders zugeführt oder in konstantem Gewichtsverhältnis kontinuierlich zudosiert werden.

Viele polare flüssige Weichmacher, wie z.B. Ethylenglykol oder Glycerol, können dem Stärkepulver aus nativen oder derivatisierten Stärken bereits vor der Extrusion, z.B. in einem Schnellmischer, zugeführt werden, wobei im allgemeinen eine genügende Rieselfähigkeit erhalten bleibt.

Alternativ können flüssige Weichmacher aber auch nach dem Einlaufrichter, z.B. am Uebergang der Feststofförderzone zur Plastifizierzone, im gewünschten Gewichtsanteil kontinuierlich in die sich bildende Schmelze dosiert werden.

Ausgewählte Additive können auch im flüssigen Weichmacher gelöst oder suspendiert sein.

Da sich durch die Anwesenheit von Wasser und infolge der geschlossenen Ausführung der beschriebenen kontinuierlich arbeitenden Mischer, ein beträchtlicher Druck aufbauen kann, wird je nach Verwendungszweck unterschiedlich weiter verfahren. Wenn ungeschäumte Produkte erwünscht sind, wird die erfindungsgemässe Masse vor dem Austrag aus dem Extruder über eine Oeffnung im Extrudergehäuse druckentlastet, gegebenenfalls durch Anlegen eines Vakuums. Nach einer sich anschliessend kurzen Förderzone mit erneutem Druckaufbau wird erfindungsgemässe Masse, z.B. über Runddüsenöffnungen, bevorzugt in Strangform, ausgetragen, gekühlt und granuliert.

Für Stärkemassen in geschäumter Form bleibt der Extruder geschlossen und durch geeignete Verfahrensparameter wie Drehzahl des Extruders, Querschnittfläche der Düsenöffnung und Wassergehalt, wird ein möglichst hoher Druck vor der Austrittsöffnung erzeugt. Der Druckabbau erfolgt dann in der Düse. Dabei entsteht eine geschäumte Masse, die z.B. als Polsterung für Verpackungen dienen kann.

Die für Thermoplastmassen üblichen Zusätze e) können alternativ in erfindungsgemässe Masse in einem erneuten Extrusionsvorgang eingearbeitet werden, wobei gegebenenfalls zusätzliche Plastifizier- und Verarbeitungshilfen zuzusetzen sind.

Werden diese Zusätze jedoch in geringem Gewichtsanteil benötigt, so können sie vorteilhafterweise

bereits der Ausgangsmischung des ersten Extrusionsschrittes zugefügt werden.

Durch das erfindungsgemässe Verfahren ist eine Masse zur Herstellung von Formkörpern, insbesondere von Fasern, Folien, Spritzgussteilen und Schaumformkörpern erhältlich. Solche Formkörper, herstellbar aus der erfindungsgemässen, thermoplastisch verarbeitbaren Masse aus Stärke und extrem hochmolekularen Acrylatcopolymeren, zeichnen sich durch eine trockene, nicht klebende Oberfläche aus, zeigen kaum Verfärbungen sowie im Vergleich mit dem bekannten Stand der Technik mechanisch wesentlich bessere und konstantere Eigenschaftswerte.

Die Erfindung wird anhand der folgenden Beispielen und Vergleichsbeispielen näher erläutert, wobei die Vergleichsbeispiele mit VV gekennzeichnet sind.

## Durchführung der Beispiele und Vergleichsbeispiele

Die Prozentangaben sind Gew.-%. Bei Prozentangaben für Bestandteile beziehen sich diese stets auf die Gesamtmasse, sofern nichts anderes angegeben ist.

Die verwendeten Stärken, sind z.T. kommerziell erhältlich, z.T. auch Spezialprodukte. Sie wurden jedoch ohne Vortrocknung mit ihrem natürlichen Wassergehalt von ca. 7% eingesetzt.

Versuche haben ergeben, dass ein möglichst hohes Scherprofil nötig ist, um eine erfindungsgemässe homogene Masse zu erhalten und dass dazu der Einsatz eines Einwellenextruders nicht genügt. Vorrichtungen mit der notwendigen Scherwirkung sind z.B. gleichlaufende Zweiwellenextruder mit entsprechend ausgewählten Knetblöcken. Geeignet sind daher z.B. die sog. ZSK-Typen von Werner + Pfleiderer, Stuttgart oder der Co-Kneter der Firma Buss, Pratteln.
Für die meisten Versuche wurde ein Doppelwellenkneter der Firma Werner + Pfleiderer eingesetzt, bevorzugt vom Typ ZSK-30 mit einem Schneckenpaar, wie es für die Polyamidkompoundierung üblich ist.

Für die Durchführung der Beispiele wurde der verwendete Doppelwellenextruder nach Bedarf mit folgenden Zusatzaggregaten bestückt:

- 2 Dosierbandwaagen für Feststoffe (Stärkepulver, Acrylatcopolymer, feste Weichmacher, Füllstoffe, etc.) in den Einzugstrichter
- 1 Flüssigkeitsdosiervorrichtung (flüssige Additive, wie Weichmacher oder auch zusätzliches Wasser) am Ende der Einzugszone
- 1 Entgasungsstutzen, überdeckend die Förderzone nach der eigentlichen Schmelzaufbereitung und vor der letzten Kompressionszone, die zur Austrittsöffnung führt
- 1 Düse mit einer Bohrung von bevorzugt 3 mm Durchmesser zum Abzug des Schmelzestranges

Sowohl die Herstellung der erfindungsgemässen Massen als auch der Massen der Vergleichsbeispiele erfolgte kontinuierlich. Hierbei wurden die Ausgangsmaterialien dem Doppelwellenkneter kontinuierlich zugeführt und die resultierende Masse als Strang abgezogen, dieser durch Luftanblasung gekühlt und granuliert. Je nach Wassergehalt und Temperatur der Mischung wurde im Verfahren Vakuum vor der Düse angelegt und so variert, dass ein weitgehend blasenfreier Strang resultierte.

Die Granulate wurden anschliessend in einem verschlossenen Gefäss zwischengelagert.

Zur Spritzgussverarbeitung wurde eine Spritzgussmaschine des Typs Arburg Allrounder -320-210-750- verwendet.

Für die Kompoundier- und späteren Verarbeitungsversuche wurden Mischungen aus nativer und/oder chemisch modifizierter Stärke mit Polyhydroxyverbindungen, wie z.B. Ethylenglykol, Polyethylenglykol, Glycerol und Sorbitol sowie gegebenenfalls Harnstoff und geringe Mengen Entformungsmittel, wie z.B. Metallstearat, Stearylstearat, etc. auf der ZSK-30 bei Massetemperaturen von 100 - 160°C, insbesondere ca. 140°C und einer Drehzahl von 100 U/min zu einer homogenen Masse verarbeitet, diese als Strang abgezogen, gekühlt und granuliert.

Der Durchsatz lag üblicherweise zwischen 6 und 10 kg/Stunde, bevorzugt bei 8 kg/Stunde. Es wurden Mischungen mit und ohne Zusatz von Acrylatcopolymer kompoundiert.

Zum Teil wurden auch Mischungen hergestellt, bei denen das Acrylatcopolymer erst bei einem zweiten Extrusionsdurchgang zugefügt wurde, wobei in diesem Extrusionsdurchgang z.T. weitere Mischungskomponenten wie tiefschmelzende, polare Thermoplaste zugegeben wurden.

Ergebnisse der durchgeführten Versuche sind: In allen Versuchen mit hochmolekularem Acrylatcopolymer-Anteil (b) verlief die Herstellung der erfindungsgemässen Massen aus der Ausgangsstärke und den Zusatzstoffen wesentlich günstiger, als in Vergleichsversuchen ohne die Komponente (b):

- Die Betriebsdaten des Extruders blieben viel konstanter. So wies das Drehmoment kaum noch Schwankungen auf während bei vergleichbarer Rezeptur ohne Zusatz von (b) jeweils so starke Schwankungen auftraten, dass in Einzelfällen die Drehmomentbegrenzung überschritten wurde
- Die Extrusionsstränge aus erfindungsgemässer Masse wiesen eine glatte Oberfläche auf und es trat

kaum Verfärbung ein

Dagegen wiesen Extrusionsstränge ohne Zusatz von (b) oft eine rauhe, z.T. auch blasige Oberfläche mit Verfärbung nach gelb/bräunlich/grau auf. Somit können Verfärbungen in unerwarteter Weise durch erfindungsgemässen Zusatz von Acrylatcopolymer wirksam reduziert werden, wobei die Wirkung konzentrationsabhängig ist. Unter üblichen Herstellbedingungen ist bei Mengen an (b) von über 4 Gew.-% meist keine Verfärbung mehr sichtbar.

Auch in der Weiterverarbeitung besitzen die erfindungsgemässen Massen aus Stärke, Acrylatcopolymer sowie Additiven wesentliche Vorteile im Vergleich zu Stärkemassen, die ohne Komponente (b) hergestellt worden sind.

Insbesondere zeigt sich, dass

- das Wiederaufschmelzen leichter und unter konstanteren Bedingungen möglich ist,
- bei der Formgebung über Spritzguss oder Extrusion die Entformung der Massen einfacher ist,
- das Kleben in der Form oder auf Abzugswalzen, z.B. bei der Herstellung von Flachfolien, nicht mehr auftritt bzw. deutlich reduziert ist,
- die Formmassen eine deutlich verbesserte Oberfläche aufweisen, weil die Stärke sehr homogen aufgeschlossen ist,
- Verfärbungserscheinungen kaum noch auftreten,
- die Formstabilität deutlich verbessert und die Schwundwerte an Spritzgussteilen deutlich reduziert sind

Auch Aussehen und Verhalten der Formkörper ist bei Verwendung von Komponente (b) deutlich besser. So weisen Spritzgussteile oder Folien einen deutlich trockneren Griff auf, wahrend Folien ohne Komponente (b) bei hoher Luftfeuchtigkeit leicht verkleben.

Bei mechanischen Messungen weisen Prüfkörper aus Massen mit Komponente (b) bessere und konstantere Werte auf als solche ohne Komponente (b).

Somit ist also die erfindungsgemässe thermoplastisch verarbeitbare Masse unter konstanteren Bedingungen leichter herstellbar und besser verarbeitbar und weist auch ein verbessertes Leistungsprofil auf als Massen, welche kein hochmolekulares Acrylatcopolymer enthalten.

Die Auswahl des Acrylatcopolymers sowie dessen optimaler Mengenanteil lassen sich durch einfache Testversuche optimal auf den verwendeten Stärketyp und den vorgesehenen Additiven bzw. Additvkonzentrationen und Zusätze abstimmen.

Hierbei hat sich gezeigt, dass bei Verwendung von statistisch aufgebauten, hochmolekularen Acrylatcopolymeren ein äusserst wirksamer Aufschluss der Stärkekörner unter Scherwirkung erzielt wird und man daher sehr homogene Massen erhält, während bei Verwendung oder Mitverwendung von Copolymeren, die einen Block aus Homopolymer (z.B. aus Polystyrol) besitzen, zusätzlich noch die Entformung während dem Verarbeiten verbessert und die Masse besonders gut vor Verfärbung geschützt wird.

Es wurde daher in einigen Beispielen eine Kombination aus rein statistischen Acrylatcopolymeren und Acrylatcopolymeren mit einem Homopolymerblock eingesetzt.

Aus der Vielzahl der durchgeführten Versuche sind nun einige im Detail beschrieben.

Dabei bedeuten:

- Stärke 1 — Maisstärke mit einem Amylosegehalt von 60 Gew.-%
- Stärke 2 — Propoxylierte Maisstärke, mit einem Amylosegehalt von 60 Gew.-%, und einem Derivatisierungsgrad von 0,05
- Stärke 3 — Maisstärke, mit einem Amylosegehalt von 70 Gew.-%
- Stärke 4 — Propoxylierte Maisstärke, mit einem Amylosegehalt von 70 Gew.-%
- Stärke 5 — Carboxymethylierte Kartoffelstärke
- WM 1 — Ethylenglykol
- WM 2 — Glycerol
- WM 3 — Sorbitol
- WM 4 — Triethylenglykol
- ACP-1 — Statistisches Acrylatcopolymer mit einem Molekulargewicht von mehr als 2 Millionen, aus 80 Gew.-% Methylmethacrylat, 13 Gew.-% Ethylacrylat und 7 Gew.-% Butylmethacrylat
- ACP-2 — Acrylatcopolymer mit einem Molekulargewicht von ca. 1 Million bestehend aus 35 Gew.-% eines Polystyrolendblocks sowie statistisch verteilten 40 Gew.-% Methylmethacrylat- und 25 Gew.-% Butylacrylat-Anteilen
- ACP-3 — Statistisches Acrylatcopolymer mit einem Molekulargewicht von mehr als 1 Million aus 90 Gew.-% Methylmethacrylat und 10 Gew.-% Butylacrylat

Die Herstellung auf der ZSK-30 erfolgte gemäss der vorgenannten allgemeinen Verfahrensbeschreibung. Die Beurteilung erfolgte durch Zeichengebung, wobei (+ +) und (+) jeweils eine sehr gute bzw. gute, (o)

eine mittlere sowie (-) und (--) eine schlechte bzw. sehr schlechte Beurteilung bedeuten. Es wurden keine Zahlenwerte zu den mechanischen Eigenschaften angeführt, da diese sehr stark von der jeweiligen Luftfeuchtigkeit abhängig sind. Wurden Werte jeweils gleichzeitig bestimmt und dabei klare Unterschiede in den Messwerten und ihrer Streuung festgestellt, so ist dies durch die erwähnte Zeichenbenotung vermerkt.

In den Beispielen 1 bis 3 wurde jeweils Stärke 2 ungetrocknet mit ihrem natürlichen Wassergehalt unter Zusatz der Polyhydroxyverbindungen WM 2 und WM 3 sowie teilweise Magnesiumstearat auf der ZSK zu Granulat verarbeitet. Dabei blieben der Drehmoment und der Materialdruck ausserordentlich konstant, und es resultierte ein gut granulierbarer Strang mit glatter Oberfläche. Bei der Verarbeitung resultierten Spritzgussteile von heller Eigenfarbe und fast glatter Oberfläche, die nur wenig Schwund aufwiesen.

Im Gegensatz dazu verlief die Herstellung der Vergleichsmaterialien VV 4 und VV 5 sehr viel schwieriger. Insbesondere schwankte das Drehmoment und damit auch der Materialdruck an der ZSK stark und es traten Strangbrüche auf.

Aus diesen Vergleichsmassen hergestellte Prüfstäbe zeigen deutlich Verzug und Schwund, ihre Oberfläche ist rauher und zeigt deutliche Verfärbung.

Anhand dieser Beispiele und Vergleichsbeispiele sind die Vorteile für die erfindungsgemässe Verwendung des hochmolekularen Acrylatcopolymeren bei der Herstellung der erfindungsgemässen Masse ersichtlich. Ferner wird gezeigt, dass bei der Verarbeitung durch Spritzguss Formkörper von deutlich höherem Gebrauchswert entstehen.

Für weitere Vergleichsversuche zwischen erfindungsgemässen Massen und Stärkemassen, die kein hochmolekulares Acrylatcopolymeres enthalten, wurde als Vergleichsbeispiel VV 6 gemäss den Bedingungen von Vergleichsbeispiel VV 4 eine grössere Granulatmenge hergestellt. Dabei wurde folgende Basisrezeptur gewählt:

Stärke 2 mit 15% WM 2 und 13% WM 3 sowie 2% Harnstoff. Unter Extrusionsbedingungen wie in den Beispielen 1 bis 3 wurden in diese Masse je 9 Gew.-% unterschiedlich hochmolekulares Acrylatcopolymer sowie 1% Magnesiumstearat eingearbeitet.

Als hochmolekulares Acrylatcopolymer wurden dann ACP-1, ACP-2 und ACP-3 sowie die käuflichen Typen PA-20 und PA-100 der Firma Kaneka, Belgien verwendet (Beispiele 13 bis 17). Als Beispiele 11 und 12 wurden Varianten mit je 4,5 Gew.-% ACP-1 und ACP-2 hergestellt.

Daraus und aus Vergleichsbeispiel VV 6 wurden DIN-Zugstäbe bei Massetemperaturen von 138 ° C und Formtemperaturen von 20 ° C gespritzt.

Aus allen erfindungsgemässen Massen resultierten Zugstäbe von heller Eigenfarbe und deutlich reduziertem Schwund.

Zur Prüfung der Abhängigkeit von Herstellbarkeit und Eigenschaften vom zugefügten Mengenanteil an hochmolekularem Acrylatcopolymeren wurden 9, 4, 2 und 1 Gew.-% ACP-2 in das Material aus Vergleichsbeispiel 6 unter den Bedingungen von Beispiel 1 bis 3 eingearbeitet und aus dem resultierenden Granulat DIN-Zugstäbe gespritzt (Beispiele 18 bis 21).

Dabei zeigte sich, dass eine klare Konzentrationsabhängigkeit sowohl in der Konstanz des Drehmoments am ZSK als auch der Qualität der Prüfkörper, z.B. bezüglich Verfärbung, Oberflächenglätte und Schwund von zugesetztem Mengenanteil an Acrylatcopolymeren besteht.

Ueberraschend zeigte sich auch, dass Formteile basierend auf einer Masse mit nur 1 Gew.-% ACP-2 deutliche Qualitätsvorteile gegenüber Massen ohne ACP-2 besitzen. So sind sie von hellerer Eigenfarbe und besitzen eine bessere Oberflächenqualität.

In den Beispielen 7 und 10 und den Vergleichsbeispielen VV 8 und VV 9 gemäss Tabelle 2 sind als übliche Stärkezusätze WM 2 mit Harnstoff und Magnesiumstearat kombiniert. In Beispiel 7 und 10 wurden als Acrylatcopolymerkomponente je 2% ACP-2 verwendet.

In der Spritzgussverarbeitung zu DIN-Zugstäben gemäss den Bedingungen von Beispiel 1 bis 3 resultieren aus den Massen gemäss Beispiel 7 und 10 formstabilere Prüfkörper von besserer Oberflächenglätte als aus den Vergleichsbeispielen VV 8 und VV 9.

Dies bestätigt, dass schon geringe Mengenanteile an extrem hochmolekularen Acrylatcopolymeren zur Herstellung der erfindungsgemässen Massen mit besseren Eigenschaften ausreichen.

Für steife Formmassen wurde Granulat aus Vergleichsbeispiel VV 6, also ohne Komponente (b), sowie Granulat mit einem Anteil von 4 Gew.-% ACP-1 (Beispiel 22) mit einem Masterbatch aus 60% Glasfasern in Polycaprolacton abgemischt und direkt zu DIN-Zugstäben verspritzt. Eine Beurteilung der Formkörper zeigt, dass bei Verwendung der erfindungsgemässen Massen eine deutlich bessere Oberflächenqualität resultiert.

In weiteren Versuchen wurden Massen aus Stärke 2, 10 Gew.-% Stärke 5 sowie 18% WM 4, 0,5% Harnstoff und 0,2% Magnesiumstearat hergestellt, wobei ACP-2 und ACP-4 in Gewichtsteilen von 1 und 2 Gew.-% zugesetzt wurden (Beispiele 23 und 24).

Alle Produkte liessen sich bei sehr konstanten Herstellbedingungen auf der ZSK-30 herstellen und zu

sehr formstabilen Prüfkörpern verspritzen.

In weiteren Versuchen wurde geprüft, ob ausgehend von nicht aufgeschlossener Stärke, mit Anteilen eines Polyamids aus Hexamethylendiamin und dimerisierter Fettsäure mit 36 C-Atomen als weiterem Zusatz, sowie stärkeüblichen Additiven und Acrylatcopolymer nach dem beschriebenen Verfahren direkt erfindungsgemässe Massen hergestellt werden können. Dazu wurde der Mischung aus Stärke 2 mit je 15 Gew.-% Weichmacher 2 und 3 das Polyamid in Gewichtsanteilen von 10 bis 25 Gew.-% zugefügt. Die Versuche wurden mit und ohne Zusatz von Acrylatcopolymer ACP-1 durchgeführt.

Während sich die Extrusion in der ZSK-30 schwierig gestaltete, wenn keine Acrylatcopolymer verwendet wurde, gelang sie deutlich besser, wenn 5% ACP-1 zugesetzt wurde.

Auch die spätere Verarbeitung im Spritzguss verlief einfacher und führte zu Formteilen von höherem Gebrauchswert, wenn ACP-1 mitanwesend war.

Weitere Versuche und Vergleichsversuche dienten der Herstellung von Flachfolien. Analog dem erfindungsgemässen Verfahren wurde ein Granulat aus 70% Stärke 2 und je 15% WM 2 und WM 3 hergestellt und für die folgenden Vergleichsversuche verwendet: auf einem Göttfert Extrusiometer mit einem Schneckendurchmesser von 20 mm wurde das Granulat aufgeschmolzen und über eine Breitschlitzdüse bei einer Massetemperatur von 165 °C als ca. 5 µm dicker Film über einen Glättkalander mit variierbarer Walzentemperatur abgezogen. Hierbei wurde bei Temperaturen über 70 °C starkes Kleben auf den Walzen festgestellt. Der anschliessend aufgewickelte Film verklebte beim langsamen Abkühlen mit sich selber, sodass er keinen Gebrauchswert besass.

Für erfindungsgemässe Versuche wurden 5 Gew.-% eines Gemisches aus 3 Teilen ACP-1 und 2 Teilen ACP-2 in die zuvor für die Vergleichsversuche verwendete Masse eingearbeitet und diese neue, nun erfindungsgemässe Masse unter denselben Bedingungen wie vorher zu einem Film verarbeitet. Die Temperatur der Abzugswalzen wurde dabei stufenweise erhöht. Erst ab 120 °C klebte die Masse auf den Walzen. Der Film wurde daher bei 110 °C Walzentemperatur abgezogen, und so eine wirksame Glättung der Oberfläche erreicht. Nach dem Aufwickeln trat kein Verkleben mehr auf. Der Film kann abgezogen und für Verpackungszwecke verwendet werden.

Aus demselben Material wurden anschliessend Flachfolien mit einer Dicke von ca. 300 µm hergestellt, die nach Wiederaufheizen tiefziehfähig waren.

Tabelle 1

| Versuch | 1 | 2 | 3 | VV4 | VV5 | VV6 |
|---|---|---|---|---|---|---|
| **REZEPTUR** | | | | | | |
| Stärke 2 | 68 | 67 | 66 | 72 | 70 | 70 |
| ACP-1 | 2 | 2 | | | | |
| ACP-2 | 3 | 3 | 3 | | | |
| Diakon APA 3 * | | | 3 | | | |
| Harnstoff | | | | | 2 | 2 |
| WM 2 | 14 | 14 | 14 | 15 | 15 | 15 |
| WM 3 | 13 | 13 | 13 | 13 | 12 | 13 |
| MgStearat | | 1 | 1 | | 1 | |
| **HERSTELLBEDINGUNG** aus ZSK-30 | | | | | | |
| Schmelztemperatur [°C] | 137 | 143 | 142 | 140-150 | 140-150 | |
| Drehmoment [% v. Max] (rel. Skala) | 82 | 83 | 84 | 80-100 | 80-100 | |
| Vakuum [atm] | - 0,4 | - 0,4 | - 0,4 | - 0,4 | - 0,4 | |
| Materialdruck [bar] | 41 | 40 | 42 | 20-30 | 20-30 | |
| Strang/Granulatbeurteilung | + | + | + | - | O | |
| **SPRITZGUSS** | | | | | | |
| T (Masse) [°C] | 138 | 138 | 138 | 138 | 138 | |
| T (Form) [°C] | 20 | 20 | 20 | 20 | 20 | |
| Entformbarkeit** | O | O | O | O | O | |
| Oberfläche ** | + | ++ | ++ | - | O | |
| Schwund ** | O | + | + | - | O | |
| Mechanische Werte ** | + | + | + | O | O | |
| Eigenfarbe ** | O | + | + | - | O | |

* Handelsprodukt der Firma ICI, England
** O mittel
- schlecht
+ gut
++ sehr gut

Tabelle 2

| Versuch | 7 | VV 8 | VV 9 | 10 | |
|---|---|---|---|---|---|
| **REZEPTUR** | | | | | |
| Stärke 2 | 77,5 | 79,3 | 78,8 | 76,8 | |
| WM 2 | 20,0 | 20,0 | 20,0 | 20,0 | |
| ACP 2 | 2,0 | | | 2,0 | |
| Harnstoff | 0,5 | 0,5 | 1,0 | 1,0 | |
| MgStearat | 0,2 | 0,2 | 0,2 | 0,2 | |
| **HERSTELLBEDINGUNG** aus ZSK-30 | | | | | |
| Schmelztemperatur [°C] | 138 | 139 | 139 | 138 | |
| Drehmoment [% v. Max] (willk. Skala) | 80 | 90 | 80 | 75 | |
| Vakuum | ja | ja | ja | ja | |
| Materialdruck [bar] | 75 | 75 | 75 | 75 | |
| **SPRITZGUSS** | | | | | |
| Entformbarkeit * | O | O | O | O | |
| Oberfläche * | + | - | - | + | |
| Schwund * | O | O | O | O | |

* O mittel
+ gut
- schlecht

## Patentansprüche

1. Thermoplastisch verarbeitbare Masse bestehend aus:
   a) Stärke, die ganz oder teilweise derivatisiert sein kann,
   b) 1-15 Gew.-%, bezogen auf a) und b), mindestens einem Acrylatcopolymeren mit einem Molekulargewicht von mindestens 0,4 Millionen,
   c) 2-15 Gew.-%, bezogen auf a) bis d), Gesamtwassergehalt,
   d) mindestens 5 Gew.-%, bezogen auf a) bis d), übliche Additive für Stärkemassen wie Weichmacher und Gleitmittel, wobei die Summe von a) bis d) 100 Gew.-% beträgt

   und gegebenenfalls zusätzlich
   e) übliche Zusätze für Thermoplastmassen wie Füllstoffe, Verstärkungsmittel, Stabilisatoren, Schlagzähmittel und Antiflamm-Mittel in wirksamen Mengen.

2. Thermoplastisch verarbeitbare Masse aus Stärke und Acrylatcopolymeren, dadurch gekennzeichnet, dass sie aus
   a) 40-85 Gew.-Teilen Stärke,
   b) 1-15 Gew.-Teilen mindestens eines Acylatcopolymeren mit einem Molekulargewicht von 0,4 - 5,0 Millionen

c) 2-15 Gew.-Teilen Gesamtwassergehalt,

d) 5-40 Gew.-Teilen weiterer nach dem Stand der Technik üblicher Additive für Stärke, wie Weichmacher, Gleitmittel, Harnstoff und/oder Harnstoffderivate, Proteine und deren Alkalisalze besteht,

wobei sich die Bestandteile a) bis d) auf 100 Gew.-Teile ergänzen und

e) zusätzlich weitere für Thermoplastmassen übliche Zusätze vorhanden sein können,

wobei die Stärke mindestens eine native oder chemisch modifizierte Stärke oder deren Gemisch ist.

**3.** Masse gemäss Anspruch 1 oder 2, dadurch gekennzeichnet, dass die Stärke einen Amylosegehalt von mehr als 50 Gew.-%, bevorzugt mehr als 65 Gew.-% besitzt.

**4.** Masse gemäss einem der voranstehenden Ansprüche, dadurch gekennzeichnet, dass der Anteil von Komponente c) 6 bis 15 Gew.-Teile beträgt.

**5.** Masse gemäss den Ansprüchen 1 bis 4 dadurch gekennzeichnet, dass die chemisch modifizierte Stärke Substituenten ausgewählt aus der Gruppe:

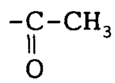 (1)

$-CH_2-CH_2-OH$ (2)

$-CH_2-CH(OH)-CH_3$ (3)

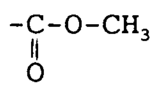 (4)

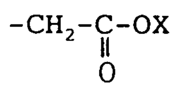 (5)

enthält, worin X ein H-Atom oder ein Metallkation ist.

**6.** Masse gemäss Anspruch 5, dadurch gekennzeichnet, dass die modifizierte Stärke einen Substitutionsgrad von 0,03 bis 0,3, bevorzugt von 0,04 bis 0,25 besitzt.

**7.** Masse gemäss einem der voranstehenden Ansprüche, dadurch gekennzeichnet, dass die Acrylatcopolymeren solche aus Estern der Acryl- und/oder Methacrylsäure sind, wobei Ester aus Alkoholen mit 1 mit 10 C-Atomen bevorzugt sind.

**8.** Masse gemäss Anspruch 7, dadurch gekennzeichnet, dass Methyl-, Ethyl-, Propyl-, Butyl-, 2-Ethylhexyl-Ester der Acryl- und/oder Methacrylsäure oder deren Gemische verwendet werden, wobei Gemische mit einem Methyl-Ester-Anteil von mehr als 50 Mol.-% bevorzugt sind.

**9.** Masse gemäss Anspruch 7 oder 8, dadurch gekennzeichnet, dass das Acrylatcopolymere bis zu 40 Gew.-% aus weiteren ungesättigten Monomeren, wie z.B. Styrol, alkyliertes Styrol oder Acrylnitril aufgebaut ist.

**10.** Masse gemäss den Ansprüchen 7 oder 8, dadurch gekennzeichnet, dass das Acrylatcopolymere Blöcke aus weiteren ungesättigten Monomeren, wie z.B. Styrol, alkyliertes Styrol, Acrylnitril oder Alken besitzt, wobei diese Blöcke bevorzugt das Kettenende der Acrylatcopolymeren bilden.

**11.** Masse gemäss einem der voranstehenden Ansprüchen, dadurch gekennzeichnet, dass die Acrylatcopolymeren Molmassen von mehr als 1 Million, bevorzugt 1 bis 5 Millionen aufweisen.

**12.** Masse gemäss einem der voranstehenden Ansprüchen, dadurch gekennzeichnet, dass der Acrylatcopolymeranteil (Komponente b)) 2 bis 10 Gew.-Teile, bevorzugt 2 bis 6 Gew.-Teile, beträgt.

**13.** Masse gemäss einem der voranstehenden Ansprüchen, dadurch gekennzeichnet, dass die weiteren Additive (Komponente d)) ausgewählt sind aus der Gruppe Weichmacher, insbesondere der Polyhydroxyverbindungen, Gleitmittel, insbesondere Ester, Amide und Salze von Fettsäuren, Harnstoff und/oder Harnstoff-Derivate und Proteine und deren Alkalisalze.

**14.** Masse gemäss einem der voranstehenden Ansprüchen, dadurch gekennzeichnet, dass die für Thermoplaste üblichen Zusätze (Komponente e)) ausgewählt sind aus der Gruppe Füllstoffe, Verstärkungsmittel, Stabilisatoren, Antiflammmittel und Schlagzähmittel.

**15.** Verfahren zur Herstellung von thermoplastisch verarbeitbaren Massen aus Stärke und hochmolekularem Acrylatcopolymeren gemäss den Ansprüchen 1 bis 14, dadurch gekennzeichnet, dass man die Komponenten bei einer Temperatur zwischen 100 und 200 °C solange der Einwirkung von Scherkräften unterwirft, bis eine homogene Masse vorliegt, die man anschliessend zerkleinert.

**16.** Verfahren zur Herstellung einer thermoplastisch verarbeitbaren Masse aus Stärke und hochmolekularen Acrylatcopolymeren gemäss den Ansprüchen 1 bis 14, dadurch gekennzeichnet, dass

a) die Komponenten vorgemischt oder getrennt in eine beheizbare Knet- und/oder Extrusionvorrichtung dosiert werden,

b) die Komponenten bei Temperaturen zwischen 100 und 200 °C, bevorzugt zwischen 140 und 180 °C aufgeschmolzen und gleichzeitig gemischt und geschert werden, wobei ein beträchtlicher Druck aufgebaut werden kann,

c) die aufgeschmolzene und plastifizierte Masse wahlweise durch Anlegen eines Vakuums ganz oder teilweise druckentlastet wird,

d) nachfolgend wahlweise in den Förderelementen der Vorrichtung ein Druckaufbau erfolgt und

e) die homogenisierte, aufgeschlossene Masse ausgetragen und geformt oder zerkleinert wird. tragen und geformt oder zerkleinert wird.

**17.** Verfahren zur Herstellung einer thermoplastisch verarbeitbaren Masse gemäss den Ansprüchen 15 oder 16, dadurch gekennzeichnet, dass das Verfahren in einer kontinuierlich arbeitenden Vorrichtung durchgeführt wird, wobei die Masse während der Einwirkung der Scherkräfte unter Druck gehalten und anschliessend kontinuierlich durch eine oder mehrere Düsenöffnungen schaumförmig ausgetragen und gegebenenfalls noch zerkleinert wird.

**18.** Verfahren zur Herstellung einer thermoplastisch verarbeitbaren Masse gemäss den Ansprüchen 15 bis 17, dadurch gekennzeichnet, dass ein Doppelwellenextruder verwendet und die flüssigen und festen Komponenten der Masse getrennt wie folgt eindosiert werden:

- über den Einlaufrichter des Extruders, der die Einzugs- und Förderzone beschickt, werden das Rohstärkepulver und das Acrylatcopolymere sowie gegebenenfalls der feste Weichmachers zudosiert, wobei die genannten Komponenten in vorgemischter Form oder als kontinuierliche Masseströme je getrennt zudosiert werden können
- in die Einzugs- und Förderzone flüssige Bestandteile wie Polyhydroxyverbindungen und gegebenenfalls darin gelöste oder suspendierte Additive, sowie gegebenenfalls Wasser, und anschliessend die Masse auf 100 - 200 °C erwärmt und dabei solange der Einwirkung von Scherkräften unterworfen wird, bis eine homogene, thermoplastisch fliessende Masse entsteht, diese anschliessend druckentlastet bzw. der Einwirkung von Vakuum unterwirft, so dass flüchtige Komponenten, insbesondere ein Teil des Wassers entweichen können und die Masse nach erneutem Druckaufbau in den Förderelementen durch eine oder mehrere Düsenöffnungen extrudiert und die Stränge abkühlt und zerkleinert werden

**19.** Verfahren gemäss einem der Ansprüche 15 bis 18, dadurch gekennzeichnet, dass einzelne Komponenten oder Anteile davon in einem oder mehreren weiteren Extrusionsdurchgängen eingearbeitet werden.

**20.** Verwendung der thermoplastisch verarbeitbaren Massen aus Stärke und hochmolekularen Acrylatcopolymeren gemäss den Ansprüchen 1 bis 14 zur Herstellung von Formkörpern.

**21.** Verwendung der thermoplastisch verarbeitbaren Massen gemäss Anspruch 20 zur Herstellung von Fasern, Monofilamenten, Filmen und Folien, insbesondere tiefziehfähigen, Extrusionsprofilen, geschäumten Produkten und Spritzgussteilen.